# EUROPÄISCHE PATENTSCHRIFT

(11) **EP 2 813 723 B1**
(45) Veröffentlichungstag und Bekanntmachung des Hinweises auf die Patenterteilung: **02.08.2017**
(21) Anmeldenummer: 14002023.1
(22) Anmeldetag: 12.06.2014
(51) Int. Cl.: F16C 29/10, F16D 121/12

(54) **Mit schräg angeordneter Abrollzone ausgestattete Brems- und/oder Klemmvorrichtung eines an mindestens einer Schiene geführten Schlittens**
Rail driven carriage braking and/or clamping device with inclined roll zone
Dispositif de freinage et/ou de blocage de chariot sur rail, à zone de roulement oblique

(30) Priorität: 12.06.2013 DE 102013009779
(43) Veröffentlichungstag der Anmeldung: 17.12.2014
(73) Patentinhaber: Zimmer, Günther Stephan, 77866 Rheinau (DE); Zimmer, Martin Johannes, 77866 Rheinau (DE)
(72) Erfinder: Zimmer, Günther Stephan, 77866 Rheinau (DE); Zimmer, Martin Johannes, 77866 Rheinau (DE)
(74) Vertreter: Thämer, Wolfgang

(56) Entgegenhaltungen:
- EP-A1- 2 381 118
- WO-A1-2010/091672
- DE-A1-102010 045 108

## Beschreibung

Die Erfindung betrifft eine Brems- und/oder Klemmvorrichtung eines an mindestens einer Schiene geführten Schlittens, wobei die in einem Gehäuse untergebrachte Vorrichtung mindestens ein, über ein Keilgetriebe betätigbares, Reibgehemme umfasst, das wenigstens einen an die Schiene anpressbaren Reibbacken aufweist. Die mit Hilfe von Fremdenergie bewegten Keilgetriebeteile sind zur Be- und zur Entlastung des Reibgehemmes pro Be- und Entlastungsrichtung mittels mindestens eines Stellglieds oder mittels eines Federsystems bewegbar, wobei das Federsystem mindestens ein Federelement umfasst. Das Keilgetriebe weist mindestens einen Käfig auf, der zwischen mindestens einem Druckstück und/oder Reibbacken und mindestens einer gehäuseseitigen Abrollzone oder einem im Gehäuse angeordneten Stützelement verschiebbar gelagert ist.

Aus der DE 10 2004 027 984 und der WO 2010/091672 A1 ist eine derartige Brems- und/oder Klemmvorrichtung bekannt. Ein von einer Zylinder-Kolben-Einheit angetriebener Schiebekeil wirkt über mindestens einen Wälzkörper auf eine Keilfläche eines zu einem Reibgehemme gehörenden Reibbacken.

Aus der EP 2 381 118 A1 ist eine Brems- und/oder Klemmvorrichtung mit zwei Reibgehemmen bekannt, bei der ein erstes Reibgehemme über ein niedrig übersetztes und ein zweites Reibgehemme über ein hoch übersetztes Getriebe betätigt wird.

Beide Getriebe sind Keilgetriebe, bei denen der treibende Keil am Kolben eines Stellglieds angeordnet ist.

Die DE 10 2010 045 108 A1 beschreibt eine Brems- und/oder Klemmvorrichtung, bei der das Reibgehemme jeder Seite über jeweils zwei verschiebbare Keile betätigt wird. Das Keilgetriebe mit kleiner Übersetzung ist federbetätigt, während das Keilgetriebe mit hoher Übersetzung z.B. pneumatisch angetrieben wird.

Der vorliegenden Erfindung liegt die Problemstellung zugrunde, eine Brems- und/oder Klemmvorrichtung zu entwickeln, die bei großen Klemmkräften und kurzen Reaktionszeiten einen einfachen und bauraumsparenden Aufbau hat und zudem dauerhaft wartungsfrei ist.

Diese Problemstellung wird mit den Merkmalen der Patentansprüche 1 und 7 gelöst. Dazu schließt das bewegliche Teil des Stellgliedes, einschließlich der Längsführung des Stellgliedes, gegenüber der Schlittenverfahrrichtung einen Keilwinkel von 0,2 bis 5 Winkelgraden ein. Die gehäuseseitige Abrollzone oder das Stützelement hat eine dem Käfig zugewandte Stirnseite, die zumindest bereichsweise eine ebene Fläche oder Rinne aufweist, die parallel zur Verfahrrichtung des beweglichen Teils des Stellgliedes und/oder dessen Führung ausgerichtet ist. Das Druckstück weist eine Abrollfläche auf, deren Flächennormale oder Mittellinie senkrecht zur Schlittenverfahrrichtung ausgerichtet ist.

Alternativ hat die gehäuseseitige Abrollzone oder das Stützelement eine dem Käfig zugewandte Stirnseite, die zumindest bereichsweise eine Fläche oder Rinne aufweist, die gegenüber der Schlittenverfahrrichtung einen Keilwinkel von 0,2 bis 5 Winkelgraden einschließt. Die Längsführung des beweglichen Teils des Stellgliedes schließt mit der Schlittenverfahrrichtung einen Führungswinkel ein, der in einem Bereich liegt, der zwischen Null Winkelgraden und dem halben Keilwinkel ± einem Viertel des Keilwinkels definiert ist.

Demnach liegt der Keilwinkel zwischen null Winkelgraden und einem Keilwinkelbereich. Der Keilwinkelbereich ist definiert durch den Keilwinkel und einem diesen umgebenden Toleranzbereich.

Bei zumindest einer der gezeigten Ausführungsvarianten dieser Brems- und/oder Klemmvorrichtung wird die am Maschinentisch ortsfeste Schiene, an der der die Vorrichtung tragende Schlitten abgebremst oder festgeklemmt werden soll, von einem Grundkörper in Form einer z.B. c-förmigen Klammer bereichsweise umgriffen. Der Grundkörper ist hierbei in der Verfahrrichtung des Schlittens formsteif am Schlitten befestigt, so dass der Bremskraftfluss den kürzest möglichen Weg zwischen Maschinenbett und Schlitten hat.

Bei mindestens einer Variante der Brems- und/oder Klemmvorrichtung wird ein Schiebekeilgetriebe von einem pneumatischen Stellglied zum Bremsen und/oder Klemmen betätigt, während bei einer zweiten Variante ein derartiger Antrieb nur zum Lösen der Brems- und/oder Klemmvorrichtung benutzt wird. Der oder die jeweiligen Antriebe können bei ihrer Betätigung z.B. jeweils mindestens einen Federspeicher spannen, dessen Federenergie später bei einer entsprechenden - der pneumatischen Antriebsbewegung - entgegengesetzt wirkenden Bewegung freigesetzt wird.

Zwischen dem Stellglied und dem jeweiligen Reibbacken wird ein Schiebekeilgetriebe eingesetzt, um die erforderliche Brems- bzw. Klemm- oder Lösekraft aufzubringen. Dieses Schiebekeilgetriebe hat einen auf der Kolbenstange des Stellglieds gelagerten Käfig, der z.B. zwei fluchtende Querausnehmungen aufweist. Beide Querausnehmungen fluchten zueinander. Im eingebauten Zustand sind sie durch die durch den Käfig geführte Kolbenstange unterbrochen. In jeder Querausnehmung ist mindestens ein Wälzkörper gelagert.

Die sich an der Kolbenstange des Stellglieds abstützenden Wälzkörper werden mittels des Käfigs in einen sich in Verfahrrichtung verengenden Spalt gezwängt, auf dessen beide seitliche Wandungen sie spreizend wirken. Die erste Wandung des sich verengenden Spalts ist eine innere Anlagefläche einer Einstellschraube oder eine Gehäusewandung. Die zweite Wandung ist eine innere Anlagefläche eines Reibbackens oder die Anlagefläche eines auf den Reibbacken wirkenden Getriebeteils.

Die Verengung des Spalts ist durch die Neigung der Wandungen gegenüber der Stellgliedverfahrrichtung oder der Verschieberichtung des Käfigs vorgegeben. Hierbei ist eine der beide Wandungen pro Reibgehemme gegenüber der Stellgliedverfahrrichtung mit einem vorgegebenen Keilwinkel geneigt.

Anstelle eines pneumatischen Stellglieds können u.a. auch hydraulische Zylinder-Kolben-Einheiten, Membranzylinder, Hubmagnete, Tauchspulenantriebe, Piezostellglieder, Formgedächtniselemente oder Federspeicher verwendet werden. Alle Stellglieder können sowohl für die Be- als auch für die Entlastungsrichtung verwendet werden. Dabei können gleich- oder verschiedenartige Stellglieder pro Belastungsrichtung hintereinander oder nebeneinander im oder am Gehäuse angeordnet werden.

Die gesamte Brems- und/oder Klemmvorrichtung hat im Querschnitt - also normal zur Führungslängsrichtung - eine Kontur, die innerhalb der Querschnittskontur der meisten handelsüblichen Führungswagen bleibt. Selbstverständlich kann die Brems- und/oder Klemmvorrichtung auch vollständig in einen Führungswagen oder in den Schlitten integriert werden. Auch kann die Vorrichtung als Notbremse eingesetzt werden. Die Vorrichtung ist nicht auf lineare Führungen beschränkt. Sie kann bei entsprechender Anpassung der Bremsbacken auch auf Kreisbahnen oder anderen, z.B. in einer Ebene liegenden, gekrümmten Bahnen verwendet werden.

Weitere Einzelheiten der Erfindung ergeben sich aus den Unteransprüchen und der nachfolgenden Beschreibung schematisch dargestellter Ausführungsformen.
- Figur 1:: Perspektivische Darstellung einer Brems- und/oder Klemmvorrichtung;
- Figur 2:: vertikaler Teilquerschnitt bzw. Frontansicht zu Figur 1;
- Figur 3:: horizontaler Längsschnitt zu Figur 2, wobei links mittels Federkraft und rechts mittels Druckluft geklemmt wird. Links zentriert sich das bewegliche Teil des Stellglieds zwischen dem Druckstück und der Einstellschraube. Rechts bewegt sich das bewegliche Teil des Stellglieds parallel zur Anlagefläche der Einstellschraube;
- Figur 4:: wie Figur 3, in geklemmtem Betriebszustand;
- Figur 5:: Prinzipschnitt durch ein Gehäuseteil mit Stellglied und Keilgetriebe, wobei der Aktor im Gehäuse linear bewegt wird, das Druckstück ist eingefahren;
- Figur 6:: Prinzipschnitt wie in Figur 5, jedoch ist das Druckstück ausgefahren;
- Figur 7:: Prinzipschnitt wie in Figur 5, jedoch mit asymmetrischem Käfig;
- Figur 8:: Prinzipschnitt wie in Figur 5, jedoch mit einem Aktor, der beim Hub eine Kippbewegung ausführt, das Druckstück ist eingefahren;
- Figur 9:: Prinzipschnitt wie in Figur 8, jedoch mit ausgefahrenem Druckstück;
- Figur 10:: Prinzipschnitt wie in Figur 5, jedoch mit einem Aktor, der beim Hub eine Pendelbewegung ausführt, das Druckstück bzw. der Aktor stehen in Mittelstellung;
- Figur 11:: Prinzipschnitt wie in Figur 10, jedoch mit eingefahrenem Druckstück;
- Figur 12:: Prinzipschnitt wie in Figur 10, jedoch mit ausgefahrenem Druckstück;
- Figur 13:: Aktor, kolbenstangenseitige Ansicht;
- Figur 14:: Aktor, kolbenbodenseitige Ansicht;
- Figur 15:: Käfig, kolbenabgewandte Seite.

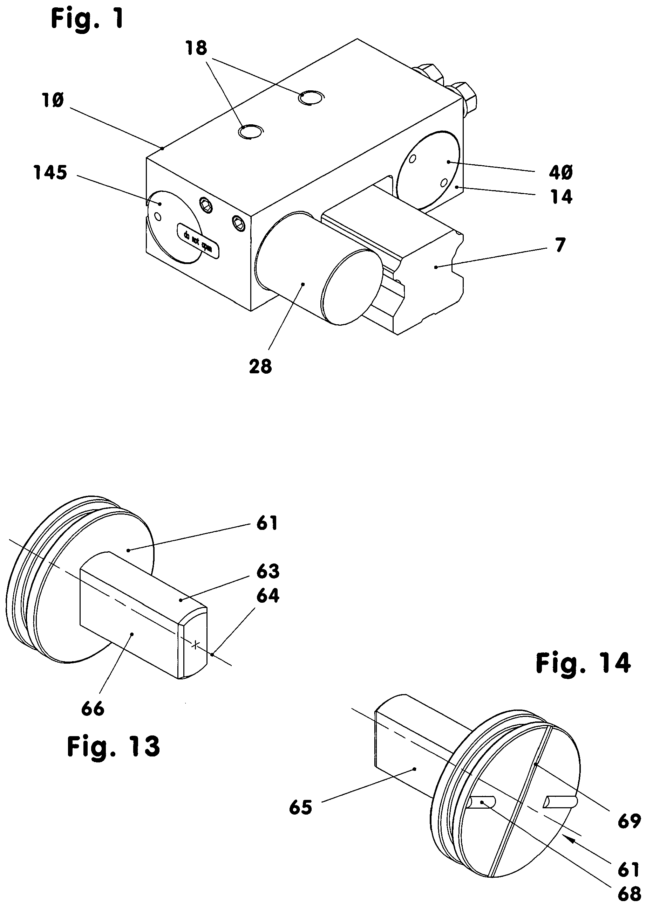

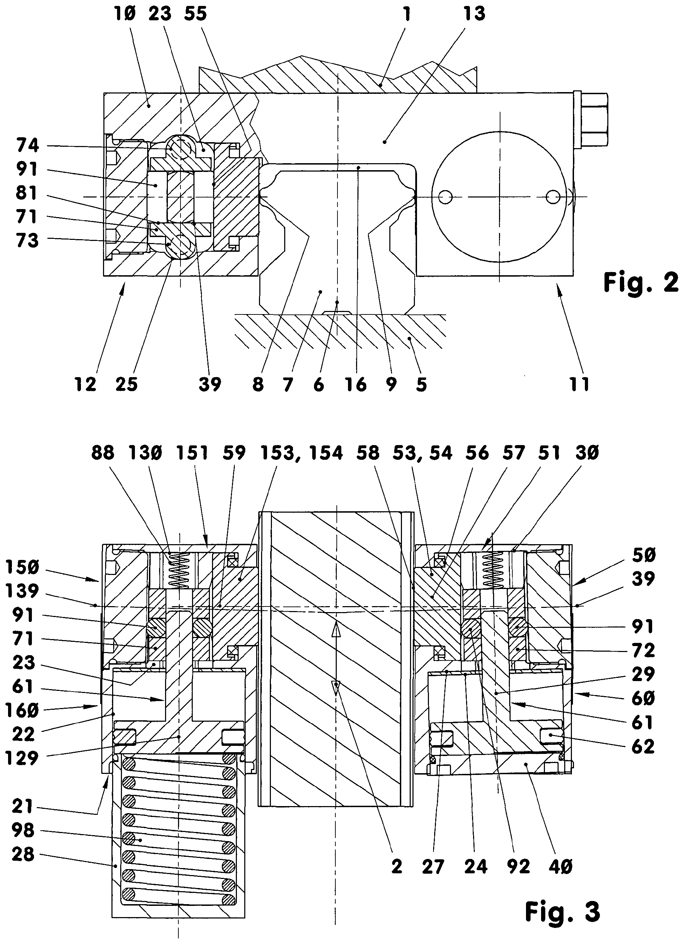

Die Figuren 1 bis 4 zeigen eine Brems- und/oder Klemmvorrichtung, die nach Figur 1 eine Führungsschiene (7) umgreift. Sie besteht u.a. aus einem Grundkörper (10), zwei Stellgliedern (60, 160), vgl. Figur 3, mehreren Rückhubfederelementen (88) und zwei Keilgetrieben (50, 150). Die Vorrichtung ist über den Grundkörper (10) an dem Schlitten (1) befestigt, der an der Führungsschiene (7) abgebremst oder geklemmt werden soll, vgl. Figur 2. Die Führungsschiene (7) verläuft parallel zur Schlittenbewegungsrichtung bzw. zur Führungslängsrichtung (2).

In der Figur 1 ist u.a. ein Abschnitt einer doppelprismatischen Führungsschiene (7) dargestellt. Die Führungsschiene (7) besteht aus einem Stab mit einem annähernd quaderförmigen Hüllquerschnitt, in den beidseitig je eine im Wesentlichen v-förmige Nut mit verbreitertem Nutgrund eingearbeitet ist. Sie kontaktiert über ihre Bodenfläche z.B. das sie tragende Maschinenbett (5), vgl. Figur 2.

Die Führungsschiene (7) hat nach Figur 2 oberhalb der v-förmigen Nut u.a. zwei Nebenflächen (8, 9), die sich, bezogen auf die vertikale Mittenlängsebene (6), spiegelbildlich gegenüberliegen. Beide Nebenflächen (8, 9) sind zueinander parallel ausgerichtet. Sie dienen den Reibgehemmen (51, 151) als Anlageflächen für die Reibbacken (53) bzw. Druckstücke (54).

Der Grundkörper (10) hat mindestens eine Gehäusezone (11) und/oder (12), die neben oder über der Führungsschiene (7) so platziert ist, dass das in ihr gelagerte Stellglied (60, 160) über das integrierte Keilgetriebe (50, 150) das bremsklotzartige Druckstück (54, 154) zum Bremsen und/oder Klemmen gegen die Führungsschiene (7) pressen kann.

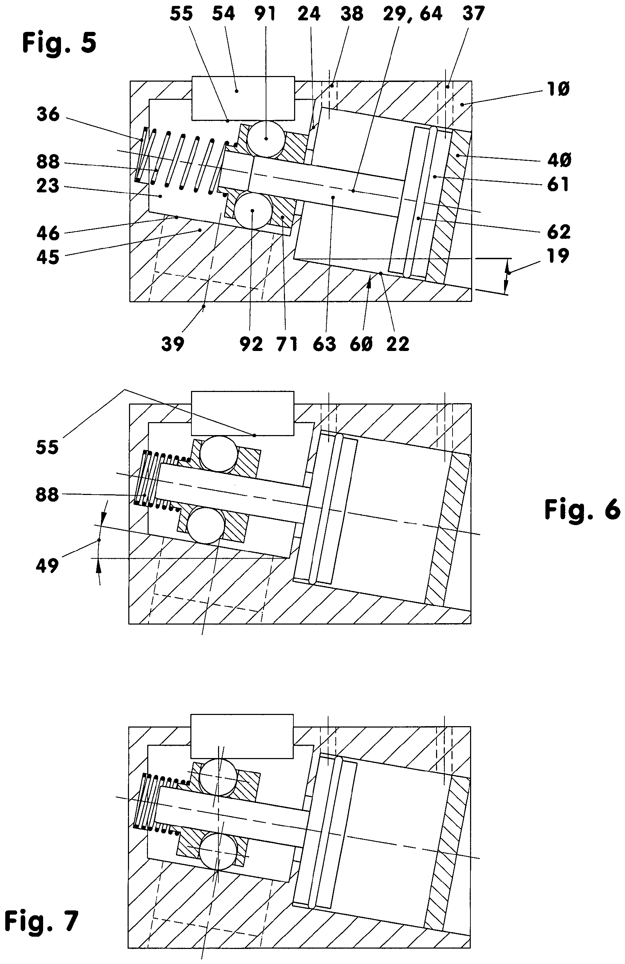

Die Figuren 5 bis 12 zeigen schematisch drei vergleichbare z.B. halbseitige Klemmvorrichtungen, die in einer Gehäusezone (11) und/oder (12) angeordnet sind. Bei jeder Klemmvorrichtung bewegt sich ein Aktor, hier ist es ein Kolben (61) mit einer z.B. angeformten Kolbenstange (63), zwischen einer hinteren und vorderen Endlage zum Aus- bzw. Einfahren des Druckstücks (54) hin und her. Der Kolben (61) ist dabei in der z.B. zylindermantelförmigen Stellgliedlängsführung (22) geführt. Letztere schließt mit der Führungslängsrichtung (2), vgl. Figur 3, einen Führungswinkel (19) ein.

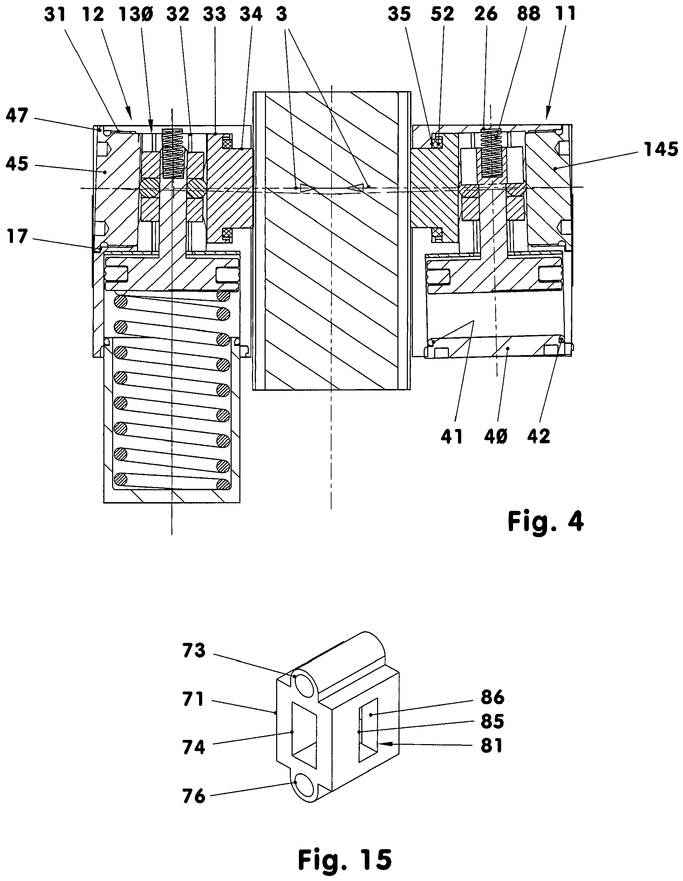

Die beidseits z.B. abgeflachte Kolbenstange (63), ähnlich der aus den Figuren 3 und 4, ragt in die neben der Stellgliedlängsführung (22) gelegene Keilgetriebeausnehmung (23) hinein. Dort rollen an der Kolbenstange (63) zwei in einem Käfig (71) geführte Wälzkörper (91, 92) ab. Der eine Wälzkörper (92) kontaktiert eine gehäuseseitige Abrollzone (46), die als Keilebene z.B. um mehrere Winkelgrade gegenüber der Schlittenverfahrrichtung (2), um den Keilwinkel (49) geneigt ist. Der andere Wälzkörper (91) liegt eingekeilt zwischen der Kolbenstange (63) und dem Druckstück (54). Die z.B. ebene Druckstückabrollfläche (55) ist parallel zur Schlittenverfahrrichtung (2) ausgerichtet. Der Käfig (71) ist auf der Kolbenstange (63) geführt. Beide Wälzkörper (91, 92) haben im Idealfall Mittellinien, die in einer Ebene liegen, wobei diese Ebene von der Mittellinie (64) der Kolbenstange (63) senkrecht geschnitten wird.

Die Abflachungen (65, 66) der Kolbenstange (63) sind zueinander parallel und zugleich parallel zur Kolbenstangenmittellinie (64).

Wird der Kolben (61) auf seiner Kolbenbodenseite über die hintere Druckluftbohrung (37) mit Druckluft beaufschlagt, fährt der Aktor (61) nach links. Die Wälzkörper (91, 92) rollen an der Keilzone (46) und am Druckstück (54) ab. Dabei bewegen sich der Käfig (71) und die von ihm geführten Wälzkörper (91, 92) etwa mit der halben Kolbengeschwindigkeit nach links. Die Bewegung des Aktors (61) ist beendet, wenn das Druckstück (54) fest an der Führungsschiene (7) anliegt, vgl. Figur 4, oder der Kolbenweg durch den Anschlag des Kolbens (61) an der zwischen der Zylinderbohrung (22) und der Keilgetriebeausnehmung (23) gelegenen Gehäusezwischenwand (24) erreicht ist. Während dieses Kolbenhubs wird eine vorgespannte Rückholfeder (88), die zwischen dem Käfig (71) und z.B. einer Einsenkung (36) in der Keilgetriebeausnehmung (23) eingespannt ist, zusätzlich gespannt, vgl. Figur 6.

Um die Klemmung zu lösen, wird über die vordere Druckluftbohrung (38) Druckluft vor die Kolbenstangenseite des Kolbens (61) gefördert. In der Folge fahren der Kolben (61) und die Kolbenstange (63) zurück. Die Rückfahrbewegung des Käfigs (71) wird von der Rückholfeder (88) unterstützt. Letztere sorgt dafür, dass der Käfig (71) - bei der vorderen Kolbenstellung - an der Gehäusezwischenwand (24) zur Anlage kommt.

Die Klemmvorrichtung nach den Figuren 5 bis 7 zeichnet sich durch eine sogenannte Aktorlinearbewegung aus. Um diese Aktorlinearbewegung zu realisieren, ist die geradlinig verlaufende Stellgliedlängsführung (22) parallel zu der z.B. hier ebenen Keilzone (46) oder einer vergleichbaren wälzkörperführenden Rinne ausgerichtet. Die Rinne hat hierbei eine Innenwandung, die einem Teil eines Mantels eines z.B. geraden Zylinders entspricht, dessen Durchmesser z.B. geringfügig größer als der Durchmessers des darin abrollenden Wälzkörpers ist. Ggf. kann die Rinne auch durch einen Kanal ersetzt werden, dessen Querschnitt z.B. trapezförmig, recht- oder dreieckig gestaltet ist. Der Keilwinkel (46) entspricht dem Führungswinkel (19).

Der Abstand zwischen der der Keilzone (46) zugewandten Abflachung (65) der Kolbenstange (63) und der Keilzone (46) entspricht dem Durchmesser des Wälzkörpers (91, 92). Demnach hat die Kolbenstange (63) bei ihrer Aus- und Einfahrbewegung immer den gleichen Abstand zur Abrollzone (46) bzw. Keilfläche, vgl. Figuren 5 bis 7.

Im Käfig (71) befinden sich Ausnehmungen, in denen die Wälzkörper (91, 92) gelagert und geführt sind. Letztere haben im Idealfall Mittellinien, die in einer Ebene liegen, die zum einen von der Mittellinie (64) der Kolbenstange (63) senkrecht geschnitten wird und die zum anderen senkrecht auf der Keilzone (46) steht.

In Figur 7 wird ein Käfig (71) mit zueinander versetzt gelagerten Wälzkörpern (91, 92) gezeigt. Hier steht die Ebene, in der die beiden Mittellinien der Wälzkörper (91, 92) liegen, senkrecht auf der Abrollfläche (55) des Druckstücks (54).

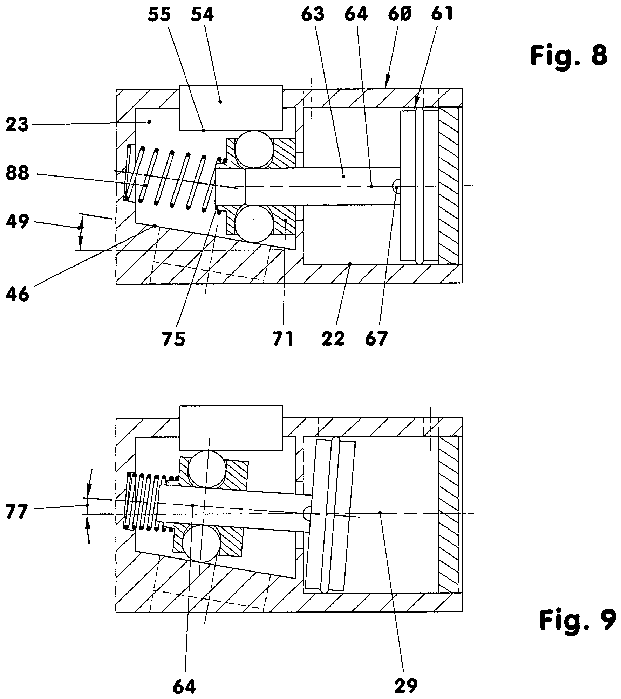

Bei einer Klemmvorrichtung nach den Figuren 8 und 9 führt die Kombination aus Kolben (61) und Kolbenstange (63) bei jedem Hub eine Aktorkippbewegung aus. Als Kippbewegung wird hier eine Schwenkbewegung des Aktors bezeichnet, die nur in eine Richtung um eine senkrecht zur Darstellungsebene der Figuren 8 und 9 orientierte Schwenkachse erfolgt.

Hier ist die Zylinderbohrung (22) bzw. die Stellgliedlängsführung parallel zur Schlittenverfahrrichtung (2) ausgerichtet, während die Keilzone (46) um den Keilwinkel (49) geneigt ist. Hier ist somit der Führungswinkel (19) null.

Beim Einfahren der Kolbenstange (63) in die Keilgetriebeausnehmung (23) wird diese aufgrund der Steigung der z.B. ebenen Keilzone (46) nach rechts abgedrängt, um das Druckstück (54) in Klemmrichtung (3) zu bewegen. Das Kippen des Aktors (61) in eine Richtung wird mit zunehmendem Hub größer, vgl. Figur 9. Die Kippbewegung des Aktors (61) erreicht im Ausführungsbeispiel bei Hubende einen Kippwinkel (77) von 4,2 Winkelgraden.

Um das Zurückführen des Käfigs (71) zu erleichtern, ist die gehäuseseitige Einsenkung (36), zur Stützung der Rückholfeder (88), in der Verlängerung der sich in der vorderen Endlage befindenden Kolbenstange (63) angeordnet. Zugleich hat die Einsenkung (36) radial eine kegelstumpfmantelförmige Wandung, während der am Käfig (71) angeformte Führungszapfen (75) radial eine konische Außenkontur aufweist. Beide Maßnahmen erleichtern die Führung der - pro Hub ihre Mittellinie verlagernde - Rückholfeder (88).

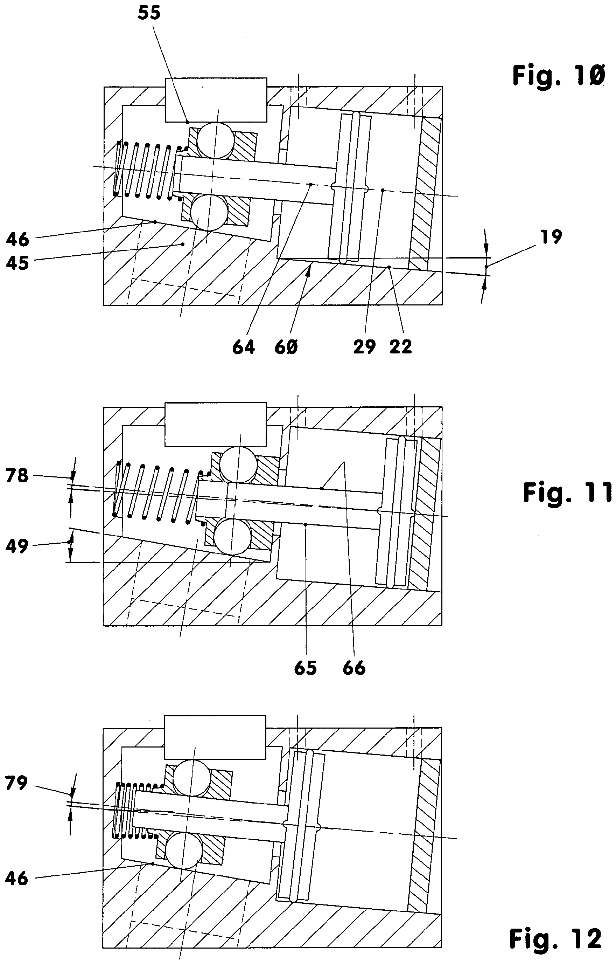

Die Figuren 10 bis 12 zeigen eine Klemmvorrichtung, bei der der Aktor (61) bei jedem Hub eine Pendelbewegung ausführt. Um die Ausschläge dieser Pendelbewegung - unter Beibehaltung des bekannten Keilwinkels (49) - gering zu halten, ist die Stellgliedlängsführung (22) gegenüber der Schlittenverfahrrichtung (2) um einen Führungswinkel (19) geneigt, der z.B. dem halben Keilwinkel (49) entspricht. Somit schneidet sich die nach links theoretisch ausgeweitete Ebene der Druckstückabrollfläche (55) mit der ebenfalls nach links theoretisch fortgesetzten Ebene der Keilzone (46) in einer Geraden, die zugleich von der Kolbenstangenmittellinie (64) geschnitten wird. Demnach liegt bei einem halben Kolbenhub die Kolbenstangenmittellinie (64) parallel zur Stellgliedlängsführung (22), vgl. Figur 10. Die durch die Mittellinien der Wälzkörper (91, 92) gebildete Ebene schneidet hier die z.B. ebene Keilzone (46) und die Druckstückabrollfläche (55) unter dem gleichen Winkel.

Fährt der Kolben (61) aus seiner hinteren Endlage los, startet die Kolbenstange (63) aus einer - Verfahrrichtung gesehenen - nach links orientierten Pendellage, vgl. Figur 11. Der zwischen der Keilzone (46) und der nächstgelegenen Abflachung (65) der Kolbenstange (63) gelegene Winkel ist größer als der Winkel, der zwischen der anderen Abflachung (66) und der Druckstückabrollfläche (55) liegt.

Die Kolbenstangenmittellinie (64) schwenkt mit zunehmendem Hub bei der Pendelbewegung in eine Mittellage, die der Mittellinie der Zylinderbohrung (22) entspricht. Auf dem restlichen Einfahrhub pendelt die Kolbenstangenmittellinie (64) ca. ab der zweiten Hubhälfte über die Mittellage hinaus - in Verfahrrichtung gesehen - nach rechts, vgl. Figur 12. Gegen Ende des Einfahrhubes ist der zwischen der Keilzone (46) und der nächstgelegenen Abflachung (65) der Kolbenstange (63) gelegene Winkel kleiner als der zwischen der anderen Abflachung (66) und der Druckstückabrollfläche (55) eingeschlossene Winkel. Im dargestellten Ausführungsbeispiel pendelt der ausfahrende Aktor (61) zunächst aus seiner in Figur 11 gezeigten Position im Uhrzeigerdrehsinn nach rechts, um nach einem Schwenk um einen Pendelwinkel (79) von z.B. 0,65 Winkelgraden die in Figur 10 gezeigte Mittenposition zu erreichen. Dann schwenkt er über die Mittellinie (64) hinaus, um von dort aus um einen Pendelwinkel (79) von z.B. 1,15 Winkelgraden weiter nach rechts zu gelangen. Am Hubende nimmt der Aktor (61) die in Figur 12 dargestellte Lage ein. Beim Zurückfahren pendelt der Aktor (61) wieder über die Mittellinie (29) der Stellgliedlängsführung (22) hinweg in die in Figur 11 wiedergegebene Lage.

Die Figuren 1 bis 4 zeigen eine Brems- und/oder Klemmvorrichtung mit zwei die Führungsschiene (7) umgreifenden Reibgehemmen (51, 151). Die Vorrichtung besteht u.a. aus einem Grundkörper (10), zwei doppeltwirkenden pneumatischen Stellgliedern (60) oder zwei einfachwirkenden Stellgliedern (160). Hier ist - aus Vereinfachungsgründen - jeweils im rechten Grundkörperbereich (11) ein doppeltwirkendes pneumatisches Stellglied (60) dargestellt, während im linken Grundkörperbereich (12) ein einfachwirkendes pneumatisches Stellglied (160) angeordnet ist. Bei Letzterem sorgt z.B. eine in einem am Gehäuse (10) befestigten Federtopf (28) angeordnete Schraubendruckfeder (98) für das klemmende Zustellen der Druckstücke (154) der Reibgehemme (151). In dem Federtopf (28) können anstelle der Schraubenfedern auch gleich- oder wechselsinnig gestapelte Tellerfedern oder andere geeignete Federtypen verwendet werden.

Selbstverständlich sind bei den gebauten Vorrichtungen in beiden Grundkörperbereichen (11, 12) jeweils die gleichen Stellglieder (60) oder (160) angeordnet. Dies gilt auch für die im Folgenden näher beschriebenen Führungen der Aktoren (61).

In den Figuren 1 bis 4 hat die jeweils linke Klemmvorrichtung einen Aktor (160), der eine Kippbewegung, vgl. Figuren 8 und 9, ausführt, während der Aktor (61) der rechten Klemmvorrichtung linear oder zumindest annähernd linear - die Abweichung von der Linearachse liegt bei maximal 0,2 Winkelgraden - bewegt wird, vgl. hierzu die Figuren 5 bis 7.

Der z.B. einteilige, aus 16 MnCr 5 gefertigte Grundkörper (10) ist im Wesentlichen ein quaderförmiges Bauteil, das an seiner Unterseite eine z.B. außermittige Nut (16) mit einem z.B. rechteckigen Querschnitt aufweist. In die Nut (16) taucht die Führungsschiene (7), nach Figur 2, zu ca. drei Viertel ein. Der Grundkörper (10) hat beispielsweise folgende Abmessungen: 70 mm x 35 mm x 28 mm.

Der Grundkörper (10) hat z.B. eine rechte (11) und eine linke Gehäusezone (12). Beide Zonen (11, 12) befinden sich unterhalb einer Flanschzone (13). Beide Gehäusezonen (11, 12) haben jeweils eine Breite von ca. 23 mm.

In der Oberseite des Grundkörpers (10) sind zur Lagerung der Klemmvorrichtung an dem sie tragenden Schlitten (1) zwei Gewindebohrungen (18) eingearbeitet, vgl. Figur 1.

Die Gehäusezone (12) weist zur Aufnahme des Antriebs (160) eine mehrstufige Sacklochbohrung (21) auf, deren Mittellinie (29) parallel zur Führungslängsrichtung (2) orientiert ist, vgl. Figur 3. Die Sacklochbohrung (21) setzt sich aus einer Zylinderflächenausnehmung (22) und einer Keilgetriebeausnehmung (23) zusammen. Zwischen beiden Ausnehmungen (22, 23) liegt ein planer Gehäusebund (27), auf dem eine Anschlagscheibe (24), z.B. durch Festschrauben, befestigt ist. Die Zylinderflächenausnehmung (22) ist bei der Verwendung eines Kolbens mit kreisrundem Querschnitt eine Zylindermantelfläche. Der Kolbenquerschnitt misst hier z.B. 314 mm².

Die Keilgetriebeausnehmung (23) ist nach den Figuren 3 und 4 eine weitgehend ovale Ausnehmung mit planem Grund. Nach Figur 2 hat sie oben und unten eine Führungsrinne (25), in der der Käfig (71, 72) ohne seitliche Begrenzung geführt ist. Er wird nur in seiner Vertikalbeweglichkeit begrenzt. Im planen Grund befinden sich zwei kurze zylindrische Sacklochbohrungen (26), die ebenfalls jeweils einen ebenen Grund aufweisen. Ihre Mittellinien liegen z.B. in einer Ebene. Jede Sacklochbohrung (26) führt eine Rückholfeder (88).

Quer zur Stufenbohrung (21) verläuft eine Gehemmebohrung (30, 130), deren Mittellinie (39, 139), die Mittellinie (29) der Stufenbohrung (21) kreuzt oder schneidet. Hierbei kann die Mittellinie (39, 139) gegenüber der Mittellinie (29) - bei entsprechender Anpassung des Keilwinkels (49), vgl. Figur 6 oder 8, - einen Winkel von 90 ± 3 Winkelgraden einnehmen.

In der Gehäusezone (12) verläuft die Mittellinie (129) parallel zur Führungslängsrichtung (2). Die Mittellinie (139) der Gehemmebohrung (130) schneidet senkrecht die vertikale Mittenlängsebene (6).

In der Gehäusezone (11) ist die Mittellinie (29) der Zylinderflächenausnehmung (22) gegenüber der Führungslängsrichtung (2) und der vertikalen Mittenlängsebene (6) z.B. um 1,74 Winkelgrade geneigt.

Die Gehemmebohrung (30, 130) hat vier abgestufte Bereiche, vgl. Figur 3. Von der Grundkörperaußenseite her sind das eine Dichtsitzbohrung (31), eine Hauptbohrung (32), eine Druckstückführungsbohrung (33) und eine Austrittsausnehmung (34). Die Hauptbohrung (32) schneidet sich mit der Keilgetriebeausnehmung (23). In diesem Bereich, vgl. Figur 3, befindet sich ein z.B. zwei Zylinderrollen (91, 92) lagernder Käfig (71).

Die zwischen der Gehäuseaußenseite und der Hauptbohrung (32) gelegene Dichtsitzbohrung (31) nimmt eine Einstellschraube (45, 145) auf. Im Bereich der Einstellschraube (45, 145) trägt die Hauptbohrung (32) zur einstellbaren Positionierung der Einstellschraube (45, 145) ein Feingewinde.

Die Einstellschraube (45, 145) ist z.B. eine zylindrische Scheibe, die an der äußeren Stirnfläche Bohrungen für den Eingriff eines Zapfenschlüssels aufweist. Sie hat z.B. eine innere, plane Stirnfläche (46), die in den Ausführungsbeispielen normal zu ihrer Mittellinie, sie ist deckungsgleich zur Mittellinie (39), orientiert ist.

Ferner hat sie ein Außengewinde, das in einer Ringnut endet. In der Nut ist ein Quetschring als Schraubensicherung und zur Abdichtung gegenüber der Dichtsitzbohrung (31) eingelassen. Mit der Einstellschraube (45, 145) wird bei montierter Vorrichtung zum einen die Spielfreiheit des Schiebekeilgetriebes (50) gewährleistet und zum anderen der Lüftspalt zwischen der Reibfläche (58) der Reibbacke (53) und der Nebenfläche (8) der Führungsschiene (7) beeinflusst.

Je nach Bauart des Grundkörpers (10) ist es auch möglich, auf die Einstellschraube (45, 145) zu verzichten, vgl. Figuren 5 bis 12. In diesem Fall ist die Stirnfläche (46) ein integrales Bestandteil des Grundkörpers (10).

Die senkrecht zur vertikalen Mittenlängsebene (6) orientierte Gehemmebohrung (130) der Gehäusezone (12) weist zur Lagerung der Einstellschraube (145) eine Dichtsitzbohrung (131) auf, deren Mittellinie (139) sich mit der Mittellinie (159) im Bereich der äußeren Stirnseite der Einstellschraube (145) nach Figur 4 unter 1,45 Winkelgraden schneidet.
Der Schnittwinkel kann im Allgemeinen zwischen 0,5 und
5 Winkelgraden liegen. Die zur Führungsschiene (7) hin verlängerte Mittellinie (159) schneidet die Mittenlängsebene (6) nach Figur 4 einige Millimeter vor der Mittellinie (139). Der Schnittpunkt ist zur vorderen Stirnseite (14) des Gehäuses (10) hin versetzt.

Innerhalb der Gehäusezone (11) fluchtet die Dichtsitzbohrung (31) mit der Hauptbohrung (32). Hier schneidet sich die Mittellinie der Kombination aus Druckstückführungsbohrung (33) und Austrittsausnehmung (34) mit der Mittellinie (39) z.B. unter 1,45 Winkelgraden. Es schneiden sich die Mittellinie (39) und die Mittellinie (59) im Bereich der Gehäuseaußenwandung der Gehäusezone (11). Zugleich treffen sich die Mittellinien (39, 139) der beiden Einstellschrauben (145) auf der vertikalen Mittenlängsebene (6). Der Schnittpunkt ist ebenfalls gegenüber der Mittellinie (59) zur Mitte des Gehäuses (10) hin versetzt angeordnet.

Aufgrund dieser Neigung der Abrollzonen (46) der Einstellschrauben (45, 145) verengt sich der quer zur Führungslängsrichtung (2) messbare Abstand der Einstellschraube (45) gegenüber dem Druckstück (54, 154) mit zunehmender Tiefe der Stufenbohrung (21).

Die Dichtsitzbohrung (31, 131) hat ein Innengewinde, in das die Einstellschraube (45, 145) eingeschraubt ist. Der Kerndurchmesser der Einstellschraube (45, 145) ist zwischen 0,75 und 1,5 mm größer als der maximale Durchmesser des Druckstücks (54, 154). Die Dichtsitzbohrung (31, 131) hat zugleich im Bereich der Gehäuseaußenwandung eine mehrere Millimeter tiefe Einsenkung (17), deren Durchmesser z.B. 3 bis 4 mm größer ist als der Kerndurchmesser der Einstellschraube (45, 145).

Nach den Figuren 3 und 4 hat die Einstellschraube (145) jeweils einen Deckelflansch (47) mit dem sie ggf. dicht auf dem Grund der Einsenkung (17) aufliegt. Durch die Auflage des Deckelflansches (47) auf dem Grund der Einsenkung (17) hat die Einstellschraube (45, 145) bei dieser Ausführungsvariante ihre Funktion als tiefeneinstellbare Schraube verloren. Ggf. ist zwischen dem Deckelflansch (47) und dem Einstellschraubengewinde ein O-Ring als zusätzliche Dichtung angeordnet.

Alternativ kann die Einstellschraube (45, 145) auch ohne den Deckelflansch (47) gefertigt sein. In diesem Fall wird er dicht und verdrehsicher im Gewinde eingeklebt.

Das Druckstück (54, 154), vgl. auch Figur 13, hat gegenüber der an ihr abwälzenden Zylinderrolle eine ebene Druckstückabrollfläche (55), deren Flächennormale parallel zur Mittellinie (159) des Druckstücks (54, 154) orientiert ist. Das Gleiche gilt für die Einstellschraube (45, 145). Auch ihre - eine Zylinderrolle abstützende - Abrollzone (46) ist normal zu ihrer Mittellinie (139) ausgerichtet.

Die Druckstückführungsbohrung (33) schließt sich Richtung Führungsschiene (7) an die Hauptbohrung (32) an. Sie geht über einen z.B. planen Gehäusebund (35) in die Austrittsausnehmung (34) über. Letztere hat einen kleineren Querschnitt als die Druckstückführungsbohrung (33). Die hat ggf. einen unrunden Querschnitt.

Das Druckstück (54) ist der zylindrische Kolben der Reibbacke (53). Am Kolben (54) ist eine Kolbenstange (57) angeformt, vgl. Figur 3. Die in die Nut (16) hineinragende Stirnseite der Kolbenstange (57) trägt an ihrem freien Ende die Reibfläche (58) der Reibbacke (53). Letztere hat eine Mittellinie, die mit der Mittellinie (39) der Druckstückführungsbohrung (33) deckungsgleich ist.

Die Kolbenstange (57) ragt bei betätigtem Reibgehemme (51) aus der Austrittsausnehmung (34) heraus. Am Übergang der Kolbenstange (57) zum Kolben (54) befindet sich eine z.B. ringkanalartige Stirnnut (56), in der nach den Figuren 3 und 4 ein elastischer Rückhubring (52) mit z.B. rechteckigem Einzelquerschnitt sitzt. Der Rückhubring (52) hält bei unbetätigtem Reibgehemme - die Vorrichtung hat keine Klemm- oder Bremswirkung - das Druckstück (54) in seiner hinteren Position.

Die Kolbenstange (57), deren äußere, radiale Kontur innerhalb der Stirnnut (56) liegt, kann zur Verdrehsicherung um die Mittellinie (39) einen zumindest annähernd quadratischen Querschnitt aufweisen. Zur Verdrehsicherung sind auch beliebige andere Querschnitte für die Kolbenstange (57) denkbar. Es ist auch möglich, die Verdrehsicherung in den Kolben (54) zu verlegen.

Zwischen den Kontaktflächen (46) und (55) ist der auf der Kolbenstange (63) des Aktors (61) gelagerte Käfig (71, 72) angeordnet. Der Käfig hat hier einen z.B. 19 mm langen quaderförmigen Grundkörper z.B. mit einem Querschnitt von 11 mm x 12 mm. Oberhalb und unterhalb des gedachten Grundkörperquerschnitts sind z.B. 3,5 mm hohe und 4,5 mm breite Führungsstege (73) angeformt. Die Führungsstege (73) kontaktieren die Führungsrinnen (25) des Gehäuses (10). Sie sind daher zu den Führungsrinnen (25) hin abgerundet, wobei der Rundungsradius der halben Stegbreite entspricht. In der dem Kolben (61) abgewandten Stirnseite weist der Käfig (71, 72) im Bereich eines jeden Führungsstegs (73) jeweils eine Längsbohrung (76) - zur Aufnahme einer Rückholfeder (88) - auf, vgl. Figur 4. Dort ist in der Gehäusezone (11) der Käfig (72) in der dem Kolben (61) abgewandten Hälfte im Bereich der oberen Rückholfeder (88) geschnitten.

Quer zum Grundkörper weist der Käfig (71, 72) eine Querausnehmung (81) zur Lagerung der Wälzkörper (91, 92) auf, vgl. auch Figur 15. Die Höhe der Querausnehmung (81) entspricht z.B. der Höhe der Führungsausnehmung (74). Die Querausnehmung (81) hat normal zur Aktorverfahrrichtung zwei zumindest bereichsweise plane Kanalwandungen (85, 86). Ggf. werden beide Kanalwandungen (85, 86) oder zumindest diejenige, die beim Betrieb der Vorrichtung der höheren Flächenpressung standhalten muss, mit einer verschleißfesten Beschichtung, z.B. einer Hartverchromung, Nitrierschicht oder dergleichen ausgestattet.

Der Durchmesser der in der Querausnehmung (81) angeordneten Zylinderrollen (91, 92) beträgt im Ausführungsbeispiel 3 mm. Die Länge der Wälzkörper (91, 92) misst z.B. 8 mm. Dementsprechend ist die Querausnehmung bezüglich ihrer Breite und Höhe jeweils um z.B. 0,05 bis 0,1 mm größer. Die Zylinderrollen (91, 92) sind zwischen ihren planen Stirnflächen und ihrer Zylindermantelfläche mit einem Radius von z.B. 0,5 bis 1,2 mm abgerundet.

Der in der Zylinderbohrung (22) geführte Pneumatikkolben (61) weist eine Ringnut auf, in der nach Figur 3 ein Dichtring (62) angeordnet ist. Die Kolbenvorderseite weist nach der Figur 14 eine ca. 0,5 mm tiefe, z.B. geradlinige Luftverteilnut (69) auf, die im Falle einer pneumatischen Kolbenbetätigung die Druckluftverteilung unterstützen soll.

An der Rückseite des Pneumatikkolbens (61) schließt sich die mit zwei zueinander parallelen Abflachungen (65, 66) versehene Kolbenstange (63) an.

In der Gehäusezone (11) liegt nach Figur 3 der pneumatisch zurückgefahrene Aktor (61) an einem scheibenförmigen Deckel (40) an. Der Deckel (40), dessen äußere Stirnfläche im Ausführungsbeispiel bündig mit der Vorderseite (14) des Grundkörpers (10) abschließt, hat dazu eine umlaufende Ringnut (41), in der ein Dichtring (42) angeordnet ist. Bei einem Pneumatikkolben (61) mit kreisrunder Querschnittsform hat der Deckel (40) ein Außengewinde, über das er im Grundkörper (10) durch Einschrauben befestigt ist.

In der Gehäusezone (12) wird anstelle des Deckels (40) der Federtopf (28) verwendet. Die in ihm gelagerte Schraubendruckfeder (98) liegt auf der kolbenbodenseitigen Stirnfläche des Aktors (61) auf.

In dem Ausführungsbeispiel der Figuren 1 bis 4 liegt bei unbetätigter Vorrichtung in der Gehäusezone (12) der Pneumatikkolben (61) am Deckel (40) an, vgl. Figur 3. Die äußere, rechte Zylinderrolle (91) kontaktiert die Einstellschraube (45), während die innere, linke Zylinderrolle (92) an der Druckstückabrollfläche (55) des Druckstückes (54) anliegt. Die Rückholfedern (88) sorgen für eine spielfreie Anlage.

Beim Einfahren des Aktors (61), also beim Klemmen, rollt die rechte Zylinderrolle (91) an der Kolbenstange (63) und an der Einstellschraube (45) ab. Sie rotiert dabei im Uhrzeigersinn. Zeitgleich rollt die linke Zylinderrolle (92) an der Kolbenstange (63) und am Druckstück (54) ab. Die Zylinderrolle (92) dreht im Gegenuhrzeigersinn. Beide Zylinderrollen (91, 92) stützen sich hierbei unter einer Gleitbewegung an der vorderen Kanalwandung (85) der Querausnehmung (81) ab. Sie verschieben dadurch den Käfig (72) auf der Kolbenstange (63).

Beispielsweise bei Vorrichtungen, die geringere Klemm- oder Bremskräfte erfordern, können die Zylinderrollen durch Kugeln ersetzt werden. Die Kugeln sitzen dann im Käfig (71) in entsprechenden Führungsbohrungen. Das Druckstück (54) kann in diesem Fall anstelle einer ebenen Abrollfläche (55) auch eine kugelführende Rinne aufweisen. Werden mehrere Führungsbohrungen pro Käfig verwendet, können diese - bezogen auf die Führungslängsrichtung - nebeneinander und/oder hintereinander angeordnet sein. Werden sie hintereinander angeordnet, müssen die vorausrollenden Wälzkörper entsprechend dem Keilwinkel kleinere Durchmesser haben.

Die in Figur 3 dargestellte Klemmung befindet sich im unbetätigten Zustand. Der Pneumatikkolben (61) liegt am Deckel (40) an. Beispielsweise über eine am Gehäuse (10) angeordnete Zuluftbohrung (37) wird Druckluft zwischen die Kolbenbodenseite und die Rückseite des Deckels (40) eingepresst. Hierdurch wird der Aktor (61) und der Käfig (72) - u.a. gegen die Wirkung der Rückholfedern (88) - nach vorn verschoben. Dabei rollen die beiden Zylinderrollen (91, 92) zwischen der Einstellschraube (45) und dem Druckstück (54) an der Kolbenstange (63) ab. In der Folge gibt das Druckstück (54) unter einer Kompression des elastischen Rückhubringes (59) nach. Die Reibbacke (53) wandert nach Figur 3 nach links, um sich an der Nebenfläche (8) der Führungsschiene (7) anzulegen, vgl. Figuren 2 und 4.

Zum Lösen der Bremse bzw. Klemmung wird der hintere Zuluftanschluss (37) entlüftet und der vordere Zuluftanschluss (38) mit Druckluft beaufschlagt. Zudem bewegen die Rückholfedern (88) den Käfig (71) nach hinten. Zugleich schiebt der sich entlastende Rückhubring (59) die Reibbacke (53) in ihre aus Figur 3 bekannte Ausgangsposition. Die Klemmung bzw. Bremse ist geöffnet.

Bei der Vorrichtungsvariante mit dem einfachwirkenden Aktor (160), vgl. Gehäusezone (12), erfolgt das Klemmen und/oder Bremsen mit Hilfe der Schraubenfedern (98) des Federspeichers, sobald der pneumatische kolbenstangenseitige Druckraum entlüftet wird. Die Schraubenfeder (98) schiebt den Kolben (61) nach vorn, wobei die abrollenden Wälzkörper (91, 92) den Käfig (71) gegen die Wirkung der erheblich schwächeren Rückholfedern (88) nach vorn schieben, um das Druckstück (154) gegen die Führungsschiene (7) zu pressen.

Zum Lösen der Vorrichtung wird über die Druckluftleitung der kolbenstangenseitige Druckraum mit Druckluft versorgt, so dass sich der Aktor (61) zurückbewegt, um hierbei den Federspeicher zu laden. Die Schraubendruckfedern (98) werden komprimiert.

Bei Textstellen, die die Wortfolge "zumindest annähernd" im Zusammenhang mit einer parallelen oder senkrechten Anordnung von zwei abstrakten Linien oder von zwei konkreten Gegenständen aufweisen, sind Abweichungen von der Parallelen oder Senkrechten von bis zu ± 3 Winkelgraden zugelassen.

### Bezugszeichenliste:

- 1: Schlitten
- 2: Führungslängsrichtung, Schlittenbewegung, Verschieberichtung, Schlittenverfahrrichtung
- 3: Klemmrichtung
- 5: Maschinenbett
- 6: vertikale Mittenlängsebene
- 7: Schiene, Führungsschiene
- 8, 9: Nebenflächen

- 10: Grundkörper, c-förmig; Gehäuse
- 11: Gehäusezone, rechts
- 12: Gehäusezone, links
- 13: Flanschzone
- 14: Vorderseite; Stirnfläche
- 16: Nut
- 17: Einsenkung
- 18: Gehäusegewindebohrungen, Befestigungsbohrungen
- 19: Führungswinkel, zwischen (2) und (29, 129)

- 21: Sacklochbohrung, gestuft
- 22: Zylinderflächenausnehmung, Zylinderbohrung, Stellgliedlängsführung
- 23: Keilgetriebeausnehmung
- 24: Gehäusezwischenwand, Anschlagscheibe
- 25: Führungsrinne
- 26: Sacklochbohrung in (23)
- 27: Gehäusebund
- 28: Federtopf, z.B. mit Außengewinde
- 29, 129: Mittellinie von (21)

- 30, 130: Gehemmebohrung, Gehemmeausnehmung

- 31, 131: Dichtsitzbohrung
- 32: Hauptbohrung
- 33: Druckstückführungsbohrung
- 34: Austrittsausnehmung
- 35: Gehäusebund
- 36: Einsenkung in (10) für (88), Sacklochbohrung
- 37: Zuluftanschluss, Druckluftbohrung hinten
- 38: Zuluftanschluss, Druckluftbohrung vorn
- 39, 139: Mittellinie von (30)

- 40: Deckel
- 41: Ringnut, umlaufend
- 42: Dichtring

- 45, 145: Einstellschraube; Stützelement, Keilgetriebeteil
- 46: Stirnfläche, innen; Abrollzone, Keilzone, Kontaktfläche
- 47: Deckelflansch
- 49: Keilwinkel, zwischen (2) und (46)

- 50, 150: Keilgetriebe, Schiebekeilgetriebe
- 51, 151: Reibgehemme
- 52: Rückhubring
- 53, 153: Reibbacken
- 54, 154: Druckstück, zyl. Kolben; Keilgetriebeteil
- 55: Druckstückabrollfläche, Kontaktfläche
- 56: Stirnnut
- 57: Kolbenstange
- 58: Reibfläche
- 59, 159: Mittellinie von (54, 154)

- 60, 160: Stellglied, Antrieb, pneumatisch/pneumatisch
- 61: Kolben, Pneumatikkolben, Aktor
- 62: Kolbendichtung, Dichtring

- 63: Kolbenstange
- 64: Aktormittellinie, Kolbenstangenmittellinie
- 65, 66: Seitenflanken, plan; Abflachungen
- 67: Anschläge, vorn, kolbenstangenseitig
- 68: Anschläge, hinten, kolbenbodenseitig
- 69: Luftverteilnut

- 71, 72: Käfig; Keilgetriebeteil
- 73: Führungsstege
- 74: Führungausnehmung, z.B.: Rechteckkanal
- 75: Führungszapfen
- 76: Längsbohrungen, zylindrisch
- 77: Kippwinkel, zwischen (29) und (64)
- 78: Pendelwinkel, hinten; zwischen (29) und (64)
- 79: Pendelwinkel, vorn; zwischen (29) und (64)
- 81: Querausnehmung, Rechteckkanal
- 85: Kanalwandung, vorn
- 86: Kanalwandung, hinten
- 88: Rückholfedern, Rückhubfederelement, Schraubendruckfeder

- 91, 92: Zylinderrollen, Wälzkörper; Keilgetriebeteil
- 98: Schraubendruckfeder

## Patentansprüche

1. Brems- und/oder Klemmvorrichtung eines an mindestens einer Schiene geführten Schlittens,
- wobei die in einem Gehäuse (10) untergebrachte Vorrichtung mindestens ein, über ein Keilgetriebe (50, 150) betätigbares, Reibgehemme (51, 151) umfasst, das wenigstens ein an die Schiene (7) anpressbares Druckstück (54, 154) und/oder Reibbacken (53, 153) aufweist,
- wobei die mit Hilfe von Fremdenergie bewegten Keilgetriebeteile (45, 145, 54, 154, 71, 72, 91, 92) zur Be- und zur Entlastung des einzelnen Reibgehemmes (51, 151) pro Be- und Entlastungsrichtung mittels mindestens eines Stellglieds (60, 160) oder mittels eines Federsystems bewegbar sind, wobei das Federsystem mindestens ein Federelement (88, 98) umfasst und
- wobei das Keilgetriebe (50, 150) mindestens einen Käfig (71, 72) aufweist, der zwischen mindestens einem Druckstück (54, 154) und/oder Reibbacken (53, 153) und mindestens einer gehäuseseitigen Abrollzone (46) oder einem im Gehäuse (10) angeordneten Stützelement (45, 145) verschiebbar gelagert ist,
**dadurch gekennzeichnet,**
- **dass** das bewegliche Teil (61) des Stellgliedes, einschließlich der Längsführung (22) des Stellgliedes (60, 160), gegenüber der Schlittenverfahrrichtung (2) einen Keilwinkel von 0,2 bis 5 Winkelgraden einschließt,
- **dass** die gehäuseseitige Abrollzone (46) oder das Stützelement (45, 145) eine dem Käfig (71, 72) zugewandte Stirnseite hat, die zumindest bereichsweise eine ebene Fläche oder Rinne aufweist, die parallel zur Verfahrrichtung des beweglichen Teils (61) des Stellgliedes und/oder dessen Führung (22) ausgerichtet ist und
- **dass** das Druckstück (54, 154) eine Abrollfläche (55) aufweist, deren Flächennormale oder Mittellinie (59) senkrecht zur Schlittenverfahrrichtung (2) ausgerichtet ist.

2. Vorrichtung gemäß Anspruch 1, **dadurch gekennzeichnet, dass** das Stützelement (45, 145) ein Bereich des Gehäuses (10) ist.

3. Vorrichtung gemäß Anspruch 1 oder 2, **dadurch gekennzeichnet, dass** das Stellglied (60) eine Zylinder-Kolben-Einheit ist.

4. Vorrichtung gemäß Anspruch 3, **dadurch gekennzeichnet, dass** das Stellglied (60, 160) als bewegliches Teil (61) einen Kolben hat, dessen Kolbenstange (63) im Käfig (71, 72) geführt ist, wobei der Käfig (71, 72) sich in einer senkrecht zur Kolbenstangenmittellinie orientierten Richtung am Gehäuse (10) abstützt.

5. Vorrichtung gemäß Anspruch 1, **dadurch gekennzeichnet, dass** bei paarweise benutzten Wälzkörpern (91, 92) deren Mittelpunkte oder Mittellinien in einer Ebene liegen, die normal zur Kolbenstangenmittellinie orientiert ist.

6. Vorrichtung gemäß Anspruch 1, **dadurch gekennzeichnet, dass** das bewegliche Teil (61) des Stellglieds (60, 160) zum Lösen der Reibbacke (53, 153) von einem geladenen Federspeicher (88, 98) angetrieben wird.

7. Brems- und/oder Klemmvorrichtung eines an mindestens einer Schiene geführten Schlittens,
- wobei die in einem Gehäuse (10) untergebrachte Vorrichtung mindestens ein, über ein Keilgetriebe (50, 150) betätigbares, Reibgehemme (51, 151) umfasst, das wenigstens ein an die Schiene (7) anpressbares Druckstück (54, 154) und/oder Reibbacken (53, 153) aufweist,
- wobei die mit Hilfe von Fremdenergie bewegten Keilgetriebeteile (45, 145, 54, 154, 71, 72, 91, 92) zur Be- und zur Entlastung des einzelnen Reibgehemmes (51, 151) pro Be- und Entlastungsrichtung mittels mindestens eines Stellglieds (60, 160) oder mittels eines Federsystems bewegbar sind, wobei das Federsystem mindestens ein Federelement (88, 98) umfasst und
- dass das Keilgetriebe (50, 150) mindestens einen Käfig (71, 72) aufweist, der zwischen mindestens einem Druckstück (54, 154) und/oder Reibbacken (53, 153) und mindestens einer gehäuseseitigen Abrollzone (46) oder einem im Gehäuse (10) angeordneten Stützelement (45, 145) verschiebbar gelagert ist,
**dadurch gekennzeichnet,**
- **dass** die gehäuseseitige Abrollzone (46) oder das Stützelement (45, 145) eine dem Käfig (71, 72) zugewandte Stirnseite hat, die zumindest bereichsweise eine ebene Fläche oder Rinne aufweist, die gegenüber der Schlittenverfahrrichtung (2) einen Keilwinkel (49) von 0,2 bis 5 Winkelgraden einschließt und
- **dass** die Längsführung (22) des beweglichen Teils (61) des Stellgliedes (60, 160) mit der Schlittenverfahrrichtung (2) einen Führungswinkel (19) einschließt, der in einem Bereich liegt, der zwischen Null Winkelgraden und dem halben Keilwinkel (49) ± einem Viertel des Keilwinkels (49) definiert ist.

8. Vorrichtung gemäß Anspruch 7, **dadurch gekennzeichnet, dass** der Führungswinkel (19) im Bereich des halben Verfahrhubs des beweglichen Teils (61) des Stellgliedes (60, 160) dem halben Keilwinkel (49) ± 0,25 Winkelgraden entspricht.

9. Vorrichtung nach mindestens einem der vorangegangenen Patentansprüche, **dadurch gekennzeichnet, dass** die Kolbenstange (63) des Kolbens (61) den Käfig (71, 72) quer zur Kolbenverfahrrichtung führt.

## Claims

1. Braking and/or clamping assembly in a slide guided to move along at least one rail,
- the assembly provided in a housing (10) and comprising at least one frictional constraining means (51, 151) adapted to be operated through a wedge-actuated transmission (50, 150) and including at least one pressing piece (54, 154) adapted to be urged against the rail (7), and/or friction jaws (53, 153);
- the members (45, 145, 54, 154, 71, 72, 91, 92) of said wedge-type transmission being moved by means of extraneous energy and being adapted to be moved by means of at least one actuator (60, 160) or by means of a spring system for loading and unloading each individual frictional constraining means (51, 151) per loading and unloading direction, said spring system comprising at least one spring element (88, 98); and
- the wedge-type transmission (50, 150) including a least one cage, said cage movably mounted between at least one pressing piece (54, 154) and/or friction jaws (53, 153) and a least one housing-side rolling zone (46) or a support element (45, 145) provided in the housing (10);
**characterized in that**
- the movable portion (61) of the actuator (60, 160), including the longitudinal guide (22) of the latter, defines a wedge angle of 0.2 to 5 degrees relative to the direction of slide displacement (2);
- the housing-side rolling zone (46) or the support element (45, 145) has an end face turned towards the cage (71, 72), said end face having therein at least in parts thereof a planar surface area or a channel oriented parallel with the direction of displacement of the movable portion (61) of the actuator and/or of its guide (22); and
- the pressing piece (54, 154) has a rolling surface area (55) of which a line normal thereto or centre line (59) is oriented perpendicular to the direction (2) of slide displacement.

2. Assembly as claimed in claim 1, **characterized in that** the support element (45, 145) comprises a portion of the housing (10).

3. Assembly as claimed in claim 1 or 2, **characterized in that** the actuator (60) comprises a piston-cylinder unit.

4. Assembly as claimed in claim 3, **characterized in that** the actuator (60, 160) has as a movable part (61) a piston of which the piston rod (63) is guided in the cage (71, 72), said cage (71, 72) supported by the housing (10) in a direction perpendicular to the centre line of the piston rod.

5. Assembly as claimed in claim 1, **characterized in that**, if rolling elements (91, 92) are used in pairs, the centre points or centre lines thereof are located in a plane oriented normal to the centre line of the piston rod.

6. Assembly as claimed in claim 1, **characterized in that**, for disengaging the friction jaw (53, 153), the movable part (61) of the actuator (60, 160) is driven by a loaded energy storing spring element (88, 98).

7. Braking and/or clamping assembly in a slide guided to move along at least one rail,
- with the assembly provided in a housing (10) and comprising at least one frictional inhibiting means (51, 151) adapted to be operated through a wedge-actu-ated transmission (50, 150) and including at least one pressing piece (54, 154) adapted to be urged against the rail (7), and/or friction jaws (53, 153);
- with the members (45, 145, 54, 154, 71, 72, 91, 92) of said wedge-type transmission, which are moved by means of extraneous energy, being adapted to be moved by means of at least one actuator (60, 160) or by means of a spring system for loading and unloading each individual frictional constraining means (51, 151) per loading and unloading direction, said spring system comprising at least one spring element (88, 98); and
- with the wedge-type transmission (50, 150) including a least one cage (71, 72), said cage movably mounted between at least one pressing piece (54, 154) and/or friction jaws (53, 153) and a least one housing-side rolling zone (46) or a support element (45, 145) provided in the housing (10); **characterized in that**
- the housing-side rolling zone (46) or the support element (45, 145) has an end face turned towards the cage (71, 72), said end face having therein at least in portions thereof a planar surface area or a channel defining a wedge angle (49) of 0.2 to 5 degrees relative to the direction of slide displacement (2); and
- longitudinal guide means (22) of the movable part (61) of the actuator (60, 160) defines relative to the direction (2) of slide displacement a guide angle (19) within a range between zero degrees and one half of the wedge angle (49) plus/ minus one quarter of the wedge angle (49).

8. Assembly as claimed in claim 7, **characterized in that**, in the area of one half the displacement stroke of the movable part (61) of the actuator (60, 160), the guide angle (19) corresponds to one half the wedge angle (49) plus/minus 0.25 degrees.

9. Assembly as claimed in at least one of the preceding claims, **characterized in that** the piston rod (63) of the piston (61) guides the cage (71, 72) in a direction transverse to the direction of piston displacement.

## Revendications

1. Dispositif de freinage et/ou de serrage d'un chariot (1) guidé sur au moins un rail (7),
- le dispositif qui est logé dans un carter (10) comprenant au moins un mécanisme à clavette (50, 150) qui comprend au moins un élément de pression (54, 154) pouvant être appuyé contre le rail (7) et/ou des mâchoires à friction (53, 153),
- les éléments (45, 145, 54, 154, 71, 72, 91, 92) du mécanisme à clavette déplacés à l'aide d'énergie extérieure pour le chargement et le déchargement de chaque patin à friction (51, 151) pouvant être déplacés, pour chaque direction de chargement et de déchargement, à l'aide d'au moins un actionneur (60, 160) ou d'un système à ressort, le système à ressort comprenant au moins un élément à ressort (88, 98),
- le mécanisme à clavette (50, 150) comprenant au moins une cage (71, 72) qui est montée de manière coulissante entre au moins un élément de pression (54, 154) et/ou des mâchoires à friction (53, 153) et au moins une zone de roulement (46) côté carter ou un élément d'appui (45, 145) disposé dans le carter (10),
**caractérisé en ce**
- **que** l'élément mobile (61) de l'actionneur (60, 160), y compris le guidage longitudinal (22) de l'actionneur (60, 160) inclut un angle de coin de 0,2 à 5 degrés par rapport au sens de déplacement du chariot (2),
- **que** la zone de roulement (46) côté carter ou l'élément d'appui (45, 145) ont une face frontale orientée vers la cage (71, 72) qui présente au moins par endroits une surface plane ou une rainure orientée parallèlement au sens de déplacement de l'élément mobile (61) de l'actionneur et/ou du guidage longitudinal (22) de ce dernier et
- **que** l'élément de pression (54, 154) présente une surface de roulement (55) dont la normale à la surface ou la ligne médiane (59) est orientée perpendiculairement par rapport au sens de déplacement (2) du chariot.

2. Dispositif selon la revendication 1, **caractérisé en ce que** l'élément de soutien (45, 145) est une zone du carter (10).

3. Dispositif selon la revendication 1 ou 2, **caractérisé en ce que** l'actionneur (60) est une unité cylindre-piston.

4. Dispositif selon la revendication 3, **caractérisé en ce que** l'actionneur (60, 160) a un piston comme pièce mobile (61) dont la tige (63) est guidée dans la cage (71, 72), la cage (71, 72) s'appuyant sur le carter (10) dans une direction orientée perpendiculairement par rapport à la ligne médiane de la tige de piston.

5. Dispositif selon la revendication 1, **caractérisé en ce que**, en utilisation des éléments roulants (91, 92) par paires, les points centraux ou les lignes médianes de ces éléments sont situés dans un plan orienté normalement par rapport à la ligne médiane de la tige de piston.

6. Dispositif selon la revendication 1, **caractérisé en ce que**, pour le desserrage de la mâchoire à friction (53, 153), l'élément mobile (61) de l'actionneur (60, 160) est entraîné par un accumulateur à ressort chargé (88, 98).

7. Dispositif de freinage et/ou de serrage d'un chariot (1) guidé sur au moins un rail (7),
- le dispositif qui est logé dans un carter (10) comprenant au moins un patin à friction (51, 151) qui peut être actionné par un mécanisme à clavette (50, 150) qui comprend au moins un élément de pression (54, 154) pouvant être appuyé contre le rail (7), et/ou des mâchoires à friction (53, 153),
- les éléments du mécanisme à clavette (45, 145, 54, 154, 71, 72, 91, 92) déplacés à l'aide d'énergie extérieure pour le chargement et le déchargement de chaque patin à friction (51, 151) pouvant être déplacés, pour chaque direction de chargement et de déchargement, à l'aide d'au moins un actionneur (60, 160) ou d'un système à ressort, le système à ressort comprenant au moins un élément ressort (88, 98) et
- le mécanisme à clavette (50, 150) comprenant au moins une cage (71, 72) qui est montée de manière coulissante entre au moins un élément de pression (54, 154) et/ou des mâchoires à friction (53, 153) et au moins une zone de roulement (46) côté carter ou un élément d'appui (45, 145) disposé dans le carter (10),
**caractérisé en ce**
- **que** la zone de roulement (46) côté carter ou l'élément d'appui (45, 145) ont une face frontale orientée vers la cage (71, 72) qui présente au moins par endroits une surface plane ou une rainure qui inclut un angle de coin (49) de 0,2 à 5 degrés par rapport au sens de déplacement du chariot (2) et
- **que** le guidage longitudinal (22) de l'élément mobile (61) de l'actionneur (60, 160) et le sens de déplacement du chariot (2) incluent un angle de guidage (19) qui se situe dans une plage définie entre 0 degré et la moitié de l'angle de coin (49) ± un quart de l'angle de coin (49).

8. Dispositif selon la revendication 7, **caractérisé en ce que** l'angle de guidage (19) dans la zone de la demie-course de l'élément mobile (61) de l'actionneur (60, 160) correspond à la moitié de l'angle de coin (49) ± 0,25 degrés.

9. Dispositif selon au moins une des revendications mentionnées ci-devant, **caractérisé en ce que** la tige (63) du piston (61) guide la cage (71, 72) transversalement par rapport au sens de déplacement du piston.
